# NEUE EUROPÄISCHE PATENTSCHRIFT

(11) **EP 1 393 613 B2**
(45) Veröffentlichungstag und Bekanntmachung des Hinweises auf die Entscheidung über den Einspruch: **29.06.2016**
(45) Hinweis auf die Patenterteilung: 14.01.2009
(21) Anmeldenummer: 03015853.9
(22) Anmeldetag: 11.07.2003
(51) Int. Cl.: A01D 43/08

(54) **Vorrichtung zur Steuerung einer Überladeeinrichtung**
Control device for a transference spout
Dispositif de contrôle pour une goulotte de transfert

(30) Priorität: 28.08.2002 DE 10240219
(43) Veröffentlichungstag der Anmeldung: 03.03.2004
(73) Patentinhaber: CLAAS Selbstfahrende Erntemaschinen GmbH, 33428 Harsewinkel (DE)
(72) Erfinder: Isfort, Heinrich, 48429 Dülmen (DE); Pollklas, Manfred, 33378 Rheda-Wiedenbrück (DE)

(56) Entgegenhaltungen:
- EP-A- 1 151 653
- EP-A- 1 219 153
- EP-A- 1 250 832
- DE-A1- 19 848 127
- US-A- 5 575 316

## Beschreibung

Die Erfindung betrifft eine Vorrichtung zur Steuerung einer Überladeeinrichtung an einer Erntemaschine, wobei die Überladeeinrichtung um eine vertikale Achse sowie zur Veränderung einer Höheneinstellung um eine horizontale Achse schwenkbar in einem Abstand neben einem Gehäuseteil der Erntemaschine angeordnet ist, mit Schwenkbereichsbegrenzungsmitteln, welche den maximal zulässigen Schwenkbereich der Überladeeinrichtung um die vertikale Achse in Richtung des betreffenden Gehäuseteils zur Vermeidung einer Kollision mit dem Gehäuseteil begrenzen. Darüber hinaus betrifft die Erfindung eine Erntemaschine mit einer solchen Vorrichtung sowie ein entsprechendes Verfahren zur Steuerung einer Überladeeinrichtung an einer Erntemaschine.

Selbstfahrende Erntemaschinen wie beispielsweise Feldhäcksler, Mähdrescher, Zuckerrohrerntemaschinen und dergleichen weisen üblicherweise eine Überladeeinrichtung auf, z. B. einen Auswurfkrümmer, ein Korntankentleerungsrohr, eine Förderkette oder ein Förderband, mit der das Erntegut von der Erntemaschine auf ein Transportfahrzeug übergeladen wird. Wenn das geerntete Gut, wie beispielsweise bei einem Feldhäcksler, während einer Erntefahrt kontinuierlich überladen werden soll, muss das Transportfahrzeug während der Erntefahrt parallel neben oder hinter der Erntemaschine herfahren. Hierzu kann die Überladeeinrichtung durch die Verschwenkung um die vertikale Achse und die horizontale Achse so positioniert werden, dass der ausgeworfene bzw. auslaufende Gutstrom an der gewünschten Stelle auf das Transportfahrzeug trifft.

Durch die Verschwenkung um die horizontale Achse wird dabei die Höheneinstellung der Überladeeinrichtung an unterschiedlich hohe Transportfahrzeuge und den steigenden Füllstand im Transportfahrzeug angepasst. Durch die Verschwenkung um die vertikale Achse wird die Überladeeinrichtung aus einer für Strassenfahrten vorgesehenen Transportstellung, in der die Überladeeinrichtung nach hinten gerichtet auf einem Transportbügel abgelegt ist, beim Ernteeinsatz mit Parallelfahrt in eine passende seitliche Position gebracht. Dabei muss die Überladeeinrichtung bei einer reihenweisen Abemtung eines Feldstücks regelmässig nach rechts und links geschwenkt werden, da das Transportfahrzeug immer auf dem bereits abgeernteten Bereich des Feldstücks fahren muss und sich daher abwechselnd rechts- und linksseitig neben der Erntemaschine befindet. Die Verschwenkung der Überladeeinrichtung um die vertikale Drehachse wird darüber hinaus zur gleichmässigen Befüllung des Transportfahrzeugs genutzt. Ist das Transportfahrzeug an einer Stelle ausreichend befüllt, kann der Fahrer der Emtemaschine die Überladeeinrichtung so verschwenken, dass der Gutstrom auf eine andere Stelle innerhalb des Transportfahrzeugs trifft.

Die Verschwenkung um die vertikale Achse erfolgt in der Regel mittels eines Drehkranzes, über den die Überladeeinrichtung mit der Erntemaschine gekoppelt ist. Ungünstigerweise ist bei den meisten Erntemaschinen keine freie Rundum-Verschwenkung der Überladeeinrichtung möglich, da Gehäuseteile der Erntemaschine, wie beispielsweise die Fahrerkabine, nach oben über die Ebene, in welcher der Drehkranz angeordnet ist, hinausragen. Um eine Kollision mit diesen Gehäuseteilen zu verhindern, befinden sich bei den bekannten Erntemaschinen am Drehkranz mechanische Anschläge, welche die Schwenkbewegung der Überladeeinrichtung um die vertikale Drehachse rechtzeitig vor dem betreffenden Gehäuseteil abstoppen.

Besonders ungünstig wirkt sich diese Schwenkbereichsbegrenzung bei Feldhäckslern aus, bei denen als Überladeeinrichtung üblicherweise ein Auswurfkrümmer in relativ kurzem Abstand hinter der Fahrerkabine angeordnet ist. Aufgrund dieser engen Anordnung des Auswurfkrümmers hinter der Fahrerkabine beträgt der Schwenkbereich bei solchen Maschinen in der Regel nicht mehr als 190 DEG . D. h. der Auswurfkrümmer kann im Wesentlichen nur innerhalb des hinteren Bereichs des Feldhäckslers und maximal um jeweils 10 DEG schräg nach vorn über die senkrechte Seitenrichtung hinaus verschwenkt werden. Dieser stark eingeschränkte Schwenkbereich der Überladeeinrichtung führt dazu, dass die Überwachung der Überladeeinrichtung für den Fahrer erschwert wird. Für die Überwachung und Steuerung der Überladeeinrichtung muss der Fahrer den Blick auf den Überladebereich richten. Andererseits muss er permanent den Bereich der Erntegutaufnahme in Fahrtrichtung beobachten. Daher betreibt der Fahrer die Überladeeinrichtung bei einer Parallelfahrt vorzugsweise möglichst nah an der Kabinenrückwand, d. h. am vorderen Anschlag. Die beiden Überwachungsbereiche, die der Fahrer zu beobachten hat, liegen hierdurch am dichtesten beieinander. Dennoch ist bei dem derzeitigen maximalen Schwenkbereich der Abstand zwischen den Bereichen immer noch so gross, dass der Fahrer zur Überwachung seinen Kopf permanent verdrehen muss oder passend positionierte Spiegel benutzen muss.

Da die genaue Ausbildung und Anordnung des Auswurfkrümmers an einem Feldhäcksler durch den optimierten Erntegutfluss innerhalb des Feldhäckslers vorgegeben sind, sind diese Grössen jedoch nicht ohne weiteres veränderbar, um den Schwenkbereich dadurch zu erweitern. Ebenso ist auch eine Veränderung der Position der Fahrerkabine, insbesondere eine Verkleinerung der Tiefe der Fahrerkabine, nicht wünschenswert, da hierdurch der Komfort des Fahrers verschlechtert würde oder sonstige Nachteile damit verbunden sind.

Der Erfindung liegt daher die Aufgabe zugrunde, eine Vorrichtung bzw. ein Verfahren zur Steuerung einer Überladeeinrichtung an einer Erntemaschine der eingangs genannten Art zu schaffen, welche eine komfortablere Bedienung und Überwachung der Überladeeinrichtung durch den Fahrer erlaubt.

Diese Aufgabe wird durch eine Vorrichtung gemäss Patentanspruch 1 und durch ein Verfahren gemäss Patentanspruch 13 gelöst.

Erfindungsgemäss wird hierbei, anders als dies bisher nach dem Stand der Technik der Fall ist, nicht ein für alle Höheneinstellungen gemeinsamer maximaler Schwenkbereich vorgegeben. Stattdessen wird der zulässige Schwenkbereich in Abhängigkeit von der aktuellen Höheneinstellung der Überladeeinrichtung verändert. Dabei kann der Schwenkbereich genau an die Form des die freie Verschwenkung behindernden Gehäuseteils und an die Form der Überladeeinrichtung angepasst und dabei zumindest in bestimmten Höheneinstellungen der Überladeeinrichtung erweitert werden. Der Fahrer kann folglich bei einer passend gewählten Höhenstellung - innerhalb der in dieser Höheneinstellung vorgegebenen Schwenkbereichsgrenzen - die Überladeeinrichtung weiter nach vorn verschwenken, beispielsweise auch über das Dach einer Fahrerkabine hinweg.

Dabei kann die Überladeeinrichtung auch aus mehreren, jeweils über horizontale Achsen untereinander verbundenen Segmenten aufgebaut sein. In diesem Fall kann zur Erweiterung des Schwenkbereichs auch eine separate Höhenverschwenkung einzelner Segmente um die zugehörige horizontale Achse erfolgen.

Der Fahrer wird durch die dadurch gegebenen erweiterten Einstellungsmöglichkeiten bei der Steuerung und Überwachung der Überladeeinrichtung entlastet. Ferner ist durch den grösseren Schwenkbereich eine flexiblere Anpassung der Überladeeinrichtung an das parallel fahrende Transportfahrzeug möglich.

Die Erfindung ist besonders vorteilhaft bei einem Einsatz an Feldhäckslern, da hier zum einen trotz des engen Abstands zwischen Auswurfkrümmer und Fahrerkabine aufgrund der gekrümmten Form des Auswurfkrümmers in bestimmten Höheneinstellungen erhebliche Schwenkbereichserweiterungen möglich sind und zum anderen gerade auch bei diesen Fahrzeugen, welche anders als Mähdrescher keinen Zwischenspeicher für das Erntegut aufweisen, zwangsläufig immer eine permanente Überladung in ein Transportfahrzeug erforderlich ist. Darüber hinaus ist die Erfindung aber auch bei allen anderen Erntemaschinen mit entsprechend schwenkbaren Überladeeinrichtungen und in den Schwenkbereich hinein ragenden Gehäuseteilen vorteilhaft einsetzbar.

Die abhängigen Ansprüche enthalten besonders vorteilhafte Ausgestaltungen und Weiterbildungen der Erfindung.

Erfindungsgemäss sind die Schwenkbereichsbegrenzungsmittel derart ausgebildet und/oder angeordnet, dass die Überladeeinrichtung bei einer Verschwenkung in Richtung des Gehäuseteils, über den bei einer bestimmten Höheneinstellung der Überladeeinrichtung festgelegten maximalen Schwenkbereich hinaus automatisch um zumindest eine horizontale Achse - d. h. gegebenenfalls auch segmentweise - in vertikaler Richtung höher geschwenkt wird. D. h. die Schwenkbewegung der Überladeeinrichtung wird nicht bei Erreichen der Grenzwinkel des aktuellen maximalen Schwenkbereichs abgestoppt, sondern es wird stattdessen eine Verschwenkung über den in der Ausgangsposition geltenden Schwenkbereich hinaus zugelassen, aber dabei gleichzeitig die Überladeeinrichtung derart höher geschwenkt, dass die in den einzelnen Höheneinstellungen jeweils geltenden Schwenkbereichsgrenzen eingehalten werden und eine Kollision mit dem Gehäuseteil sicher vermieden wird. Daher muss der Fahrer, wenn er bei Erreichen der aktuellen Schwenkbereichsgrenzen eine weitere Verschwenkung nach vorn wünscht, nicht zuvor selbst manuell eine andere Höheneinstellung anfahren, sondern lediglich mittels der üblichen Benutzerschnittstelle die gewünschte Schwenkbewegung um die vertikale Achse vorgeben, wobei die für diese Schwenkbewegung erforderliche Höhenverstellung vollautomatisch durchgeführt wird.

Die Schwenkbereichsbegrenzungsmittel können dabei derart ausgebildet und/oder angeordnet sein, dass mit zunehmender Höheneinstellung der Überladeeinrichtung der maximal zulässige Schwenkbereich kontinuierlich erweitert wird. Alternativ kann auch mit zunehmender Höheneinstellung der Überladeeinrichtung stufenweise der maximal zulässige Schwenkbereich erweitert werden. Dementsprechend kann auch die automatische Anhebung der Überladeeinrichtung bei einer Verschwenkung gegen das den Schwenkbereich eingrenzende Gehäuseteil sowohl kontinuierlich als auch in der Art erfolgen, dass die Schwenkbewegung um die vertikale Achse zeitweise unterbrochen wird, dann die Überladeeinrichtung zunächst automatisch in eine höhere Stellung angehoben wird und dann weiter um die vertikale Achse verschwenkt wird usw.

Bei einer besonders kostengünstig realisierbaren Ausführungsform weist die Vorrichtung Mittel zur Ermittlung eines Höhenpositionswerts auf, welcher die Höheneinstellung der Überladeeinrichtung repräsentiert. Hierbei kann es sich um Sensoren an der Überladeeinrichtung handeln, die in Abhängigkeit von der Höheneinstellung ein entsprechendes Signal erzeugen. Ebenso kann es sich hierbei auch um eine Speichereinrichtung bzw. einen Zwischenspeicher handeln, um die Steuerbefehle bzw. entsprechende Stellsignale an die Stelleinrichtung, die eine bestimmte Position vorgeben, zu registrieren und zwischenzuspeichern. Darüber hinaus weist die Vorrichtung eine Benutzerschnittstelle zur Erzeugung eines Steuerbefehls zur Verschwenkung der Überladeeinrichtung um die vertikale Achse auf. Schliesslich umfasst die Vorrichtung eine Steuereinheit, welche auf Basis des Höhenpositionswerts Grenzwerte für den zugehörigen, maximalen Schwenkbereich ermittelt und auf Basis des Steuerbefehls und unter Berücksichtigung der ermittelten Schwenkbereichsgrenzwerte ein Stellsignal an eine Stelleinrichtung zur entsprechenden Verschwenkung der Überladeeinrichtung um die vertikale Achse ausgibt. Dabei bildet die Steuereinheit einen "elektronischen Anschlag", der bei Erreichen der Schwenkbereichsgrenzwerte die Schwenkbewegung abstoppt, d. h. kein Stellsignal mehr an die Stelleinrichtung zur Verschwenkung um die vertikale Achse ausgibt und stattdessen beispielsweise dem Fahrer das Erreichen der Schwenkbereichsgrenze signalisiert.

Bei einer besonders vorteilhaften Variante dieses Ausführungsbeispiels weist die Steuereinheit ausserdem Mittel auf, um in diesem Fall ein weiteres Stellsignal zum Verfahren der Überladeeinrichtung in eine andere Höheneinstellung mit einem grösseren Schwenkbereich an eine Stelleinrichtung zur Verschwenkung der Überladeeinrichtung um die horizontale Achse auszugeben. Dabei wird die Überladeeinrichtung so lange nach oben geschwenkt, bis eine Höheneinstellung mit einem ausreichenden Schwenkbereich erreicht ist oder der Schwenkbereich nicht mehr durch eine Höherstellung erweitert werden kann. Alternativ kann die Steuereinheit auch, sobald der Schwenkwinkel bezüglich der vertikalen Achse feststeht, der gemäss dem Steuerbefehl angefahren werden soll, eine passende Höheneinstellung suchen, in der der betreffende Schwenkwinkel innerhalb der Schwenkbereichsgrenzwerte liegt. Es wird dann direkt diese optimale Höheneinstellung angefahren.

Die Steuereinheit kann beispielsweise in Form von Software auf einer Rechnereinheit der erfindungsgemässen Vorrichtung zur Steuerung der Überladeeinrichtung realisiert sein.

Neben einer solchen rein elektronischen Realisierung der Erfindung ist es auch möglich, die Vorrichtung weitgehend mechanisch aufzubauen.

Hierzu können die Schwenkbereichsbegrenzungsmittel beispielsweise eine Kulisse, z. B. mit einer Auflaufschräge, sowie eine damit zusammenwirkende Abtasteinrichtung umfassen. Zumindest dann, wenn sich die Überladeeinrichtung in einem bestimmten Höheneinstellungsbereich befindet, fährt diese Abtasteinrichtung bei der Verschwenkung der Überladeeinrichtung um die vertikale Achse bereichsweise, d. h. zumindest in einem bestimmten Abschnitt, an der Kulisse entlang. Durch das Verfahren der Abtasteinrichtung entlang der Kulisse wird die Überladeeinrichtung in bestimmten Schwenkbereichen bei einer Verschwenkung um die vertikale Achse in Richtung des Gehäuseteils zwangsläufig auch um die horizontale Achse höher geschwenkt.

Dies kann zum einen rein mechanisch erfolgen, indem beispielsweise am Gehäuse der Erntemaschine in den Endbereichen des maximalen Schwenkbereichs, z. B. rechts und links hinter der Fahrerkabine, anstelle der bekannten feststehenden Anschläge Auflaufschrägen angeordnet sind, auf denen an der Überladeeinrichtung fest fixierte Tast- bzw. Andruckelemente, wie Rollen, Bolzen oder dergl., auflaufen und mechanisch die Überladeeinrichtung nach oben drücken. Die Tast- bzw. Andruckelemente sind hierbei beispielsweise an dem ansonsten üblicherweise an der Erntemaschine fixierten Ende eines Hydraulikzylinders für die horizontale Verschwenkung angeordnet.

Zur Erhöhung der Stabilität, insbesondere um ein Schwingen der Überladeeinrichtung um die horizontale Achse zu vermeiden, wird jedoch bevorzugt die zur Verschwenkung üblicherweise verwendete Stelleinrichtung angesteuert. Hierzu umfasst die Abtasteinrichtung ein entsprechendes Steuerelement, beispielsweise ein Hydroventil oder ein Potentiometer, welches mit einem Tastelement gekoppelt ist, das die Kulisse entlang fährt.

Bei einem weiteren Ausführungsbeispiel umfassen die Schwenkbereichsbegrenzungsmittel unter Festlegung unterschiedlich weiter Schwenkbereiche mehrere stufenartig angeordnete mechanische Anschläge und/oder Endschalter. Die Anordnung dieser Anschläge und/oder Endschalter ist dabei so gewählt, dass die Überladeeinrichtung bei einer Verschwenkung um die vertikale Achse in Richtung des betreffenden Gehäuseteils in unterschiedlichen Höheneinstellung jeweils gegen verschiedene der Anschläge und/oder Endschalter fährt.

Auch bei dieser Variante ist eine automatische Höherschwenkung der Überladeeinrichtung bei Erreichen der Schwenkbereichsgrenzen möglich. Hierzu ist beispielsweise ein Teil der Endschalter mit einer Stelleinrichtung zur Verschwenkung der Überladeeinrichtung um die horizontale Achse verschaltet. Bei einer Verschwenkung der Überladeeinrichtung gegen einen der Endschalter wird dann durch den Schaltimpuls des Endschalters die Stelleinrichtung für die Verschwenkung um die horizontale Achse angesteuert und die Überladeeinrichtung um ein bestimmtes Mass nach oben verschwenkt.

Bei einem besonders bevorzugten Ausführungsbeispiel weist die Überladeeinrichtung abgabeseitig, d. h. an ihrem von der Erntemaschine wegweisenden Ende, eine verstellbare Auswurfklappe auf. Solche Auswurfklappen befinden sich üblicherweise am Ende des Auswurfkrümmers eines Feldhäckslers. Durch die Stellung der Auswurfklappe kann die Wurfweite, d. h. der Abstand zwischen dem an der Erntemaschine befindlichen, eingangsseitigen Ende des Auswurfkrümmers und dem Auftreffpunkt des Gutstroms auf dem Transportfahrzeug gesteuert werden. Wird die Auswurfklappe nach unten geschwenkt, so ist die Wurfweite bei gleichbleibender Höheneinstellung des Auswurfkrümmers geringer als bei einer nach oben geschwenkten Auswurfklappe.

Die Vorrichtung weist hierbei erfindungsgemäss Steuermittel auf, um die Auswurfklappe bei einer Verschwenkung der Überladeeinrichtung um die vertikale und/oder horizontale Achse automatisch derart in Abhängigkeit von einer anzufahrenden Höheneinstellung und eines anzufahrenden Schwenkwinkels bezüglich der vertikalen Achse anzusteuern, dass ein vor der Verschwenkung eingestellter Überladeabstand konstant bleibt. Unter "Überladeabstand" wird dabei der Abstand zwischen dem in einer definierten horizontalen Auftreffebene liegenden Auftreffpunkt des Gutstroms, beispielsweise dem Auftreffpunkt innerhalb der durch die Ladekanten des Transportfahrzeugs vorgegebenen Ebene, und einer durch die vertikale Drehachse der Überladeeinrichtung in Längsrichtung, d. h. in Fahrtrichtung der Erntemaschine verlaufenden Linie verstanden.

Durch diese Steuerung der Auswurfklappe wird dafür gesorgt, dass trotz einer Höhenverstellung und/oder einer Verschwenkung der Überladeeinrichtung um die vertikale Achse der Auftreffpunkt auf einer parallel neben dem Erntefahrzeug verlaufenden Linie verbleibt. Dadurch wird sichergestellt, dass bei einer Verschwenkung der Überladeeinrichtung nach vorn, insbesondere unter Anhebung der Überladeeinrichtung über die Fahrerkabine, der Erntegutstrom nicht plötzlich neben dem Transportfahrzeug auftrifft. Der Fahrer kann folglich komfortabel durch Eingeben eines einfachen Schwenkbefehls nach vorn die Verschwenkung erreichen, ohne gleichzeitig den Auftreffpunkt genau kontrollieren zu müssen und die weiteren Parameter, insbesondere die Auswurfklappensteuerung, nachzufahren, um den Erntegutstrahl sicher in das Begleitfahrzeug zu befördern.

Eine solche Vorrichtung mit einer automatischen Nachsteuerung der Auswurfklappe bei einer Verschwenkung der Überladeeinrichtung um die vertikale und/oder horizontale Achse, so dass der vor der Verschwenkung eingestellte Überladeabstand konstant bleibt, hat im Übrigen auch unabhängig von der erfindungsgemässen Schwenkbereichserweiterung den Vorteil einer grossen Entlastung für den Fahrer und leistet einen zusätzlichen Beitrag zur Minimierung von Ernteverlusten.

Um dem Fahrer der Erntemaschine jederzeit die Möglichkeit zu geben, unabhängig von eventuell vorgesehenen, automatischen Steuerungen jede beliebige Einstellung der einzelnen Stelleinrichtungen anzufahren und insbesondere auch den Überladeabstand beliebig zu variieren, besteht vorteilhafterweise die Möglichkeit, sämtliche automatischen Steuerfunktionen auszuschalten bzw. zu übersteuern.

Die Erfindung wird im Folgenden unter Hinweis auf die beigefügten Figuren anhand von Ausführungsbeispielen noch einmal näher erläutert. Hieraus ergeben sich auch weitere Einzelheiten und Vorteile der Erfindung. Es zeigen:
Figur 1 eine Draufsicht auf einen Feldhäcksler mit einem parallel fahrenden Transportfahrzeug während des Ernteeinsatzes,
Figur 2 eine Hinteransicht des Feldhäckslers und des Transportfahrzeugs gemäss Figur 1,
Figur 3 ein schematisches Blockschaltbild der wesentlichen Komponenten einer elektronisch realisierten, erfindungsgemässen Vorrichtung zur Steuerung eines Auswurfkrümmers,
Figur 4 eine perspektivische seitliche Detailansicht des Auswurfkrümmers eines Feldhäckslers im Bereich des Drehkranzes mit einer elektromechanisch realisierten, erfindungsgemässen Steuervorrichtung,
Figur 5 eine weitere perspektivische Detailansicht des unteren Teils des Auswurfkrümmers gemäss Figur 4, jedoch schräg von hinten gesehen.

Bei den in den Figuren 1 und 2 dargestellten Ausführungsbeispielen handelt es sich bei der Erntemaschine um einen Feldhäcksler 1, welcher mittels eines Pickup-Vorsatzgeräts 33 kontinuierlich Grasschwaden 38 aufsammelt. Das Gras wird im Feldhäcksler 1 gehäckselt und mittels eines Auswurfkrümmers 2 an ein parallel fahrendes Transportfahrzeug 30 übergeladen. Bei dem Transportfahrzeug 30 handelt es sich hier um eine Zugmaschine 31, welche einen Transportanhänger 32 neben dem Feldhäcksler 1 herzieht. Der Auswurfkrümmer 2 ist in üblicher Weise um eine vertikale Drehachse 3 und - zur Veränderung der Höheneinstellung - um eine horizontale Achse 4 schwenkbar direkt hinter der Fahrerkabine 5 des Feldhäckslers 1 angeordnet.

Der Auswurfkrümmer 2 ist in den Figuren 1 und 2 jeweils in zwei verschiedenen Positionen I, II dargestellt. In der ersten Position 1 befindet sich der Auswurfkrümmer 2 in einer niedrigeren Höheneinstellung, in der das abwurfseitige Ende des Auswurfkrümmers 2 unmittelbar über einer Ladekante des Transportanhängers 32 angeordnet ist. Der Auswurfkrümmer 2 ist in dieser ersten Position I ganz nach vorn gegen die Rückwand 6 der Fahrerkabine 5 verschwenkt. Wie Figur 2 deutlich zeigt, ist eine weitere Verschwenkung des Auswurfkrümmers 2 nach vorn in dieser Höheneinstellung nicht möglich. Bei herkömmlichen Feldhäckslern wird üblicherweise durch im Bereich des Drehkranzes angeordnete, feststehende, mechanische Anschläge verhindert, dass der Auswurfkrümmer, egal in welcher Höheneinstellung, weiter nach vorn verschwenkt werden kann.

Aus Figur 1 wird ersichtlich, dass der Fahrer der Erntemaschine, welcher zum einen den Erntebereich in Fahrtrichtung 37 voraus und gleichzeitig den Überladebereich um den Auftreffpunkt 34 des Erntegutstroms im Transportanhänger 32 herum beobachten muss, ständig zwischen einer Blickrichtung in Fahrtrichtung voraus und einer Blickrichtung schräg nach hinten wechseln muss. Dies ist für den Fahrer eine zusätzliche Belastung. Erfindungsgemäss weist der Feldhäcksler 1 daher eine Steuervorrichtung für den Auswurfkrümmer 2 auf, welche nicht mit feststehenden Schwenkbereichgrenzen arbeitet. Stattdessen sind die Schwenkbereichsbegrenzungsmittel hier derart ausgebildet, dass der maximal zulässige Schwenkbereich in Abhängigkeit von der Höheneinstellung des Auswurfkrümmers 2 bestimmt wird.

Wie in Figur 2 deutlich erkennbar ist, besteht bei der gekrümmten Form des Auswurfkrümmers 2 durchaus die Möglichkeit, bei einer Höherstellung des Auswurfkrümmers 2 den Auswurfkrümmer 2 noch weiter um die vertikale Achse 3 nach vorn zu schwenken, ohne dass der Auswurfkrümmer 2 mit der Fahrerkabine 5 kollidiert. Daher kann in dieser höheren Position der Schwenkbereich entsprechend grösser gewählt werden, so dass der Auswurfkrümmer 2 in die in den Figuren 1 und 2 gezeigte zweite Position II weiter nach vorn verschwenkt werden kann. In dieser zweiten Position II befindet sich der Auftreffpunkt 34 des ausgeworfenen Erntegutstroms im Transportanhänger 32 erheblich weiter vorn gegenüber der ersten Position I des Auswurfkrümmers 2. Der Überladebereich liegt somit enger an dem ständig vom Fahrer zu beobachtenden Erntebereich. Der Fahrer hat daher die Möglichkeit, ohne eine grössere Drehung des Kopfes während der Fahrt aus dem Augewinkel heraus den Überladebereich mit zu überwachen. Eine ständige Kontrolle dieses Bereichs durch den Fahrer während der Erntefahrt ist folglich einfacher zu gewährleisten.

Figur 3 zeigt ein Ausführungsbeispiel für eine elektronisch realisierte, erfindungsgemässe Vorrichtung zur Steuerung des Auswurfkrümmers 2. Einen zentralen Teil dieser Vorrichtung bildet eine Rechnereinheit 19, beispielsweise ein Mikrocontroller, welche über eine Benutzerschnittstelle 21, 20 vom Benutzer eingegebene Steuerbefehle AB, WB, HB zur Höhenpositionsverstellung des Auswurfkrümmers 2, zur Verschwenkung des Auswurfkrümmers 2 um die vertikale Drehachse 3 und zur Verstellung einer abgabeseitig am Auswurfkrümmer 2 befestigten Auswurfklappe 7 empfängt.

Die Benutzerschnittstelle 20, 21 weist eine Wipptaste 20 zur Höhenverstellung des Auswurfkrümmers 2 auf. In Abhängigkeit davon, ob der Bediener diese Wipptaste 20 nach oben oder unten verkippt, wird ein entsprechender Höhenpositionssteuerbefehl HB an die Rechnereinheit 19 weitergeleitet. Ausserdem weist die Benutzerschnittstelle 20, 21 eine Multirichtungstaste 21 auf, welche in vier Richtungen gekippt werden kann. Diese Multirichtungstaste 21 kann beispielsweise in einen Multifunktionsgriff integriert sein, so dass der Fahrer einfach mit dem Daumen die Multirichtungstaste 21 bedienen kann. Bei einem Wippen nach rechts oder links wird ein entsprechender Schwenkwinkelsteuerbefehl WB erzeugt, um den Auswurfkrümmer 2 nach rechts oder nach links um die vertikale Drehachse 3 zu verschwenken. Bei einem Wippen der Multirichtungstaste 21 nach oben oder unten wird ein entsprechender Auswurfklappensteuerbefehl AB erzeugt, mit dem die Auswurfklappe 7 hoch- bzw. heruntergestellt wird. Die Anordnung der Richtungen auf der Wipptaste 20 und der Multirichtungstaste 21 sind so gewählt, dass der Fahrer intuitiv in die richtige Richtung drückt.

Ein von der Benutzerschnittstelle 20, 21 kommender Steuerbefehl AB, WB, HB wird in der Rechnereinheit 19 zunächst intern bearbeitet. Die Rechnereinheit 19 gibt dann ein entsprechendes Stellsignal AS, WS, HS an eine Höhenpositionsstelleinrichtung 25, eine Schwenkwinkelstelleinrichtung 24 oder an eine Auswurfklappenstelleinrichtung 23 aus. Im vorliegenden Fall handelt es sich bei der Höhenpositionsstelleinrichtung 25 und der Auswurfklappenstelleinrichtung 23 um Ventile, welche jeweils Hydraulikzylinder 10, 18 ansteuern, mit denen der Auswurfkrümmer 2 um die horizontale Achse 4 bzw. die Auswurfklappe 7 bezüglich des Auswurfkrümmers 2 verkippt werden. In Figur 2 sind die beiden Hydraulikzylinder 10, 18 zur Verstellung der Höheneinstellung des Auswurfkrümmers 2 sowie zur Verstellung der abgabeseitig am Auswurfkrümmer 2 angeordneten Auswurfklappe 7 gut erkennbar. Bei der Schwenkwinkelstelleinrichtung 24 zur Verschwenkung des Auswurfkrümmers 2 um die vertikale Achse 3 handelt es sich in der Regel um eine Hydraulikpumpe, welche elektrohydraulisch eine Ölmenge auf einen Hydraulikmotor gibt, der abtriebsseitig mittels eines Schneckenrads in einen Drehkranz 8 des Auswurfkrümmers 2 eingreift und somit den Auswurfkrümmer 2 verschwenkt. Die Schwenkrichtung wird hierbei von der Drehrichtung des Hydraulikmotors vorgegeben. Anstelle des Hydraulikmotors kann aber auch ein Schrittmotor oder dergl. verwendet werden, der direkt mit den passenden elektrischen Stellsignalen angesteuert wird.

Es ist klar, dass die von der Rechnereinheit 19 ausgehenden Stellsignale AS, WS, HS gegebenenfalls noch an die jeweiligen Stelleinrichtungen 23, 24, 25 angepasst, beispielsweise von einer digitalen in eine analoge Form umgewandelt werden müssen. Das gleiche gilt für die von der Benutzerschnittstelle 20, 21 kommenden Steuerbefehle AB, WB, HB, welche ebenfalls für die Rechnereinheit 19 von einer analogen in eine digitale Form umgewandelt werden müssen. Die hierfür benötigten Einrichtungen sind hier aber der Übersichtlichkeit halber nicht dargestellt. Sie können sowohl Teil der Rechnereinheit 19 als auch Teile der Benutzerschnittstelle 20, 21 bzw. der einzelnen Stelleinrichtungen 23, 24, 25 sein. Es kann sich auch um separate Einheiten handeln, die jeweils zwischen die Benutzerschnittstelle 20, 21, die Rechnereinheit 19 und die jeweiligen Stelleinrichtungen 23, 24, 25 geschaltet werden.

Die eigentliche Steuereinheit 26, welche auf Basis der vom Benutzer gegebenen Steuerbefehle AB, WB, HB die einzelnen Stelleinrichtungen 23, 24, 25 ansteuert, ist in Form von Software in der Rechnereinheit 19 implementiert. Sie ist in Figur 3 daher in Form eines Softwaremoduls 26 gestrichelt innerhalb der Rechnereinheit 19 dargestellt. Anhand der zuvor eingegebenen Steuerbefehle AB, WB, HB und/oder durch Mitprotokollieren der ausgehenden Stellsignale AS, WS, HS ist in der Steuereinheit 26 jederzeit bekannt, in welcher genauen Position sich der Auswurfkrümmer 2 und die Auswurfklappe 7 gerade befinden. Die aktuellen Positionsdaten werden dabei rein softwaremässig gewonnen und zwischengespeichert. Alternativ ist es auch möglich, dass an den passenden Stellen des Auswurfkrümmers 2 und der Auswurfklappe 7 Sensoren angebracht sind, welche die jeweilige aktuelle Stellung registrieren und diese Sensoren wieder mit der Rechnereinheit 19 verbunden sind und entsprechend Positionssignale an die Rechnereinheit 19 liefern (nicht dargestellt).

Zur Steuerung des Auswurfkrümmers 2 arbeitet die Steuervorrichtung 26 gemäss Figur 3 wie folgt:
Anhand der bekannten Höheneinstellung des Auswurfkrümmers 2 werden von der Steuereinheit 26 zunächst die zugehörigen Schwenkbereichsgrenzwerte festgestellt. Dies kann beispielsweise durch Auslesen einer Tabelle 28 erfolgen, die in einem mit der Rechnereinheit 19 verbundenen Speicher 22 hinterlegt ist. In dieser Tabelle 28 sind für jede mögliche Höheneinstellung die Schwenkbereichsgrenzwerte verzeichnet. Diese Tabelle kann von der Steuereinheit 26 in beliebiger Weise durchsucht werden. So können nicht nur für eine bestimmte Höheneinstellung die Schwenkbereichsgrenzwerte festgestellt werden, sondern es kann auch festgestellt werden, welche Höheneinstellung angefahren werden muss, um bestimmte Schwenkbereichsgrenzwerte zu erreichen.

Wenn der Fahrer über die Multirichtungstaste 21 einen Schwenkwinkelsteuerbefehl WB zur Verschwenkung des Auswurfkrümmers 2 um die vertikale Achse eingibt, wird anhand dieses Steuerbefehls WB zunächst von der Steuereinheit 26 festgestellt, ob der vom Auswurfkrümmer 2 anzufahrende Schwenkwinkel innerhalb der für die jeweilige Höheneinstellung ermittelten Schwenkbereichsgrenzwerte liegt. Ist dies der Fall, so wird ein entsprechendes Winkelstellsignal WS an die Schwenkwinkelstelleinrichtung 24 ausgegeben. Wird dagegen festgestellt, dass sich der anzufahrende Schwenkwinkel ausserhalb der in der aktuellen Höheneinstellung vorgegebenen Schwenkbereichsgrenzwerte befindet, gibt es zwei verschiedene Möglichkeiten.

Zum einen kann die Steuereinheit 26 mit Hilfe der Tabelle 28 die nächstliegende Höheneinstellung heraussuchen, welche einen genügend grossen Schwenkbereich aufweist. Die Steuereinheit 26 gibt dann entsprechende Schwenkwinkelstellsignale WS und Höhenpositionsstellsignale HS an die Schwenkwinkelstelleinrichtung 24 und die Höhenpositionsstelleinrichtung 25 aus, so dass der vom Fahrer gewünschte Schwenkwinkel angefahren wird und dabei gleichzeitig der Auswurfkrümmer 2 um den erforderlichen Weg nach oben verschwenkt wird, so dass eine Kollision mit der Fahrerkabine 5 vermieden wird. Die Veränderung der Höheneinstellung kann dabei kontinuierlich oder stufenweise erfolgen. Bei der zweiten Variante ist diese Funktion ausser Kraft gesetzt und es wird nur solange ein Schwenkwinkelstellsignal WS an die Schwenkwinkelstelleinrichtung 24 ausgegeben, bis der Auswurfkrümmer 2 die für die jeweilige Höheneinstellung vorgesehenen Schwenkbereichsgrenzwerte erreicht hat. Eine automatische Höhenverstellung durch die Steuereinheit 26 erfolgt in diesem Modus nicht.

Vorzugsweise ist es möglich, die Steuereinheit 26 zwischen den verschiedenen Modi hin- und herzustellen, so dass beispielsweise im Normalfall eine automatische Anpassung der Höheneinstellung zur Erreichung eines gewünschten Schwenkwinkels durchgeführt wird und der Fahrer bewusst diesen Modus ausstellen kann, wenn er beispielsweise bei ungünstigen Windverhältnissen und bei trockenem Erntegut wie z. b. Gras zur Vermeidung von Erntegutverlusten lieber den Auswurfkrümmer 2 unter allen Umständen möglichst nah oberhalb der Ladekante des Transportfahrzeugs 30 halten möchte und dafür auf eine optimale Anordnung des Beobachtungsbereichs verzichtet.

Mit der Rechnereinheit 19 können im Übrigen auch weitere Bedienelemente der Benutzerschnittstelle sowie weitere Rechnerkomponenten, Stelleinrichtungen, Anzeigeeinrichtung etc. verbunden sein, um andere Funktionen der Erntemaschine zu steuern und/oder zwischen verschiedenen Betriebsmodi hin- und herzuschalten. Diese Komponenten sind aber der Übersichtlichkeit wegen in Figur 3 nicht dargestellt.

Bei dem in Figur 3 dargestellten Ausführungsbeispiel weist die Vorrichtung 26 eine automatische Auswurfklappensteuereinheit 27 auf. Diese sorgt dafür, dass bei einem Verschwenken des Auswurfkrümmers 2 um die vertikale und/oder horizontale Achse 3, 4 ein zuvor eingestellter Überladeabstand 36 zwischen dem Feldhäcksler 1 und dem Auftreffpunkt 34 des Erntegutstroms auf dem Transportwagen 30 konstant bleibt. Diese Auswurfklappensteuereinheit 27 ist hier in Form eines Softwaremoduls 27, beispielsweise als Unterroutine der Steuereinheit 26, auf der Rechnereinheit 19 realisiert. Hierzu wird noch einmal auf die Figur 1 verwiesen. In dieser Figur sind sowohl die Wurfweite 35 als auch der Überladeabstand 36 grafisch dargestellt. Die Wurfweite 35 ist hier definiert als der Abstand der vertikalen Drehachse 3 des Auswurfkrümmers 2 zum Auftreffpunkt 34 des Gutstroms innerhalb der durch die Höhe der Ladekanten des Transportfahrzeugs 32 definierten Auftreffebene. Der Überladeabstand 36 ist dagegen definiert als der Abstand des Auftreffpunkts 34 von der durch die vertikale Drehachse 3 des Auswurfkrümmers 2 verlaufenden Längsachse des Feldhäckslers 1. Der Überladeabstand 36 gibt somit den Abstand vor, in dem das Transportfahrzeug 32 neben dem Feldhäcksler 1 parallel herfahren muss. Der in den Figuren dargestellte Auftreffpunkt 34 bzw. die zur Definition des Auftreffpunkts 34 hier definierte Auftreffebene in Höhe der Ladekante des Transportanhängers 32 ist willkürlich gewählt. Es kann ebenso ein Auftreffpunkt auf dem Feldboden 39 oder auf einer frei gewählten, beliebigen Ebene definiert werden. Ebenso kann der Überladeabstand 36 auch bezüglich einer beliebigen Linie bzw. Position am Feldhäcksler 1 definiert werden.

Wie aus Figur 1 leicht zu ersehen ist, muss bei einer Verschwenkung des Auswurfkrümmers 2 von der ersten Position 1 in die zweite Position II die Wurfweite 35 erheblich verlängert werden, um auf den gleichen Überladeabstand 36 zu kommen. Dies wird zum Teil durch die zwangsweise erfolgende Höherschwenkung des Auswurfkrümmers 2 kompensiert. Im Übrigen muss eine Anpassung der Wurfweite 35 durch eine Verschwenkung der Auswurfklappe 7 am abgabeseitigen Ende des Auswurfkrümmers 2 erfolgen.

Um diese automatische Anpassung durchzuführen, ist in dem Speicher 22 ein Datenfeld 29 hinterlegt, in dem die jeweiligen Überladeabstände in Abhängigkeit von den möglichen Klappenpositionen, den Schwenkwinkelpositionen und den Höheneinstellungen des Auswurfkrümmers 2 verzeichnet sind. Da der Steuereinheit 26 - wie zuvor beschrieben - ohnehin jederzeit die Daten über die aktuellen Positionen des Auswurfkrümmers 2 und der Auswurfklappe 7 vorliegen, kann anhand des Datenfelds 29 jederzeit der aktuelle Überladeabstand 36 ermittelt werden. Umgekehrt kann jederzeit bei einem vorgegebenen Überladeabstand 36 sowie bei bekannter Veränderung der Schwenkwinkelposition und der Höheneinstellung des Auswurfkrümmers 2 mit Hilfe des Datenfelds 29 die passende Auswurfklappenstellung ermittelt werden, um einen vorgegebenen Überladeabstand 36 zu erreichen. Die Steuereinheit 26 kann dann für die Ausgabe eines entsprechenden Auswurfklappenstellsignals AS von der Rechnereinheit 19 an die Auswurfklappenstelleinrichtung 23 sorgen.

Auch die Funktion dieser automatischen Auswurfklappensteuereinheit 27 lässt sich vorteilhafterweise durch den Fahrer jederzeit ausschalten, so dass er auf Wunsch durch eine Anhebung des Auswurfkrümmers 2 beliebig den Überladeabstand 36 variieren kann, ohne dass dies durch eine Gegensteuerung der Auswurfklappe 7 kompensiert wird. Ausserdem kann jederzeit über die Multirichtungstaste 21 eine manuelle Übersteuerung der Auswurfklappe 7 durchgeführt werden, wobei eine solche manuelle Änderung der Stellung der Auswurfklappe 7 zu einem neuen Überladeabstand 36 führt. Der neue Überladeabstand 36 dient dann als Basis für die nachfolgende automatische Nachführung.

Die Figuren 4 und 5 zeigen eine elektromechanisch realisierte Variante einer erfindungsgemässen automatischen Steuerung der Höheneinstellung des Auswurfkrümmers 2 in Abhängigkeit vom eingestellten Schwenkwinkel um die vertikale Achse 3.

Hierzu ist am unteren Ende des um die horizontale Achse 4 verschwenkbaren Auswurfkrümmers 2 eine ca. 3/4 -kreisförmig um den Drehkranz 8 herumlaufende Kulisse 11 angeordnet. Die Kulisse 11 ist hierbei über Verbindungsstege 14 so mit dem unteren Ende des Auswurfkrümmers 2 gekoppelt und wird so am Drehkranz 8 geführt, dass bei einer Verschwenkung des Auswurfkrümmers 2 um die horizontale Achse 4 nach unten zwangsläufig die Kulisse 11 parallel zum Drehkranz 8 nach oben verstellt wird und sich die Kulisse 11 bei einem Verschwenken des Auswurfkrümmers 2 mit um die vertikale Achse 3 dreht. Die Kulisse 11 weist endseitig jeweils Anschläge 13 und in einem Bereich in einem Abstand vor den Anschlägen 13 jeweils eine Auflaufschräge 12 auf. Im Bereich der Mittelachse des Feldhäckslers 1 ist direkt hinter der Fahrerkabinenrückwand 6 eine Tasteinrichtung 15 fest angeordnet, welche eine Tastrolle 17 aufweist, die über einen Hebel 16 mit einer Stellachse eines hier innerhalb eines Gehäuses angeordneten Drehpotentiometers (nicht sichtbar) verbunden ist. Dieses Drehpotentiometer gibt bei einem Verdrehen der Stellachse ein Stellsignal an ein Hydraulikventil (ebenfalls nicht dargestellt) aus, welches wiederum einen Hydraulikzylinder 10 zur Verschwenkung des Auswurfkrümmers 2 um die horizontale Achse 4 ansteuert. Der Hebel 16 wird federgelagert in der dargestellten Ruhelage gehalten.

Die Vorrichtung gemäss den Figuren 4 und 5 funktioniert in der Weise, dass bei einem Absenken des Auswurfkrümmers 2 in eine untere Stellung automatisch die Kulisse 11 so weit angehoben wird, dass die Tastrolle 17 der Tasteinrichtung 15 auf der Oberkante 9 der Kulisse 11 entlang rollt. Wird dann der Auswurfkrümmer 2 mittels des Drehkranzes 8 um die vertikale Achse 3 verschwenkt, so läuft die Tastrolle 17 ungefähr in einer Position, in der der Auswurfkrümmer 2 eine senkrechte Schwenkwinkelstellung zum Erntefahrzeug 1 erreicht hat, gegen die Auflaufschräge 12 der Kulisse 11, wodurch die Tastrolle 17 nach oben gedrückt wird. Damit wird automatisch der Hebel 16 entgegen einer Federkraft nach oben verschwenkt, so dass die Stellachse des Drehpotentiometers dementsprechend gedreht wird und ein passendes Signal ausgegeben wird, welches wiederum bewirkt, dass der Hubzylinder 10 den Auswurfkrümmer 2 entsprechend nach oben verschwenkt. Diese Verschwenkung erfolgt soweit, dass die Tastrolle 17 die Auflaufschräge heraufläuft. Durch die Höherschwenkung des Auswurfkrümmers 2 kann damit der Schwenkbereich ein erhebliches Stück erweitert werden, bis schliesslich die Tastrolle 17 gegen den Anschlag 13 an der Kulisse 11 anstösst. Die Tasteinrichtung 15 ist hierbei so aufgebaut, dass bei einem Anschlagen der Tastrolle 17 an den jeweiligen Anschlag 13 ein Signal erzeugt wird, welches die Verschwenkung um die vertikale Achse 3 stoppt. Das heisst, die Tasteinrichtung 15 hat hier gleichzeitig die Funktion eines Endschalters.

Es wird noch einmal darauf hingewiesen, dass es sich bei den in den Figuren gezeigten Realisierungen der Erfindung lediglich um Ausführungsbeispiele handelt, die durch den Fachmann beliebig variiert werden können. So kann beispielsweise anstelle eine Drehpotentiometers in der Tasteinrichtung 15 auch direkt ein Hydroventil eingesetzt werden, welches durch den Hebel 16 gesteuert wird. Des Weiteren kann auch eine Kulisse fest am Gehäuse der Erntemaschine befestigt werden und eine passende Tasteinrichtung wird am beweglichen Teil des Auswurfkrümmers befestigt. Ebenso kann auch der Auswurfkrümmer aus mehreren hintereinander gekoppelten Segmenten bestehen, welche jeweils separat um eine das betreffende Segment mit den Nachbarsegmenten bzw. der Erntemaschine verbindende, horizontale Achse in ihrer Höhe verschwenkbar sind. Die Segmente können dann separat zur Vergrösserung des Schwenkbereichs in ihrer Höheneinstellung verschwenkt werden. Schliesslich sind auch die verschiedensten Variationen bei der elektronischen Realisierung der Erfindung denkbar. Insbesondere können auch die Merkmale der verschiedenen elektronisch und mechanisch realisierten Ausführungsbeispiele kombiniert werden.

### Bezugszeichenliste

- 1: Erntemaschine (Feldhäcksler)
- 2: Überladeeinrichtung (Auswurfkrümmer)
- 3: vertikale Achse
- 4: horizontale Achse
- 5: Gehäuseteil (Fahrerkabine)
- 6: Kabinenrückwand
- 7: Auswurfklappe
- 8: Drehkranz
- 9: Oberkante
- 10: Hubzylinder
- 11: Kulisse
- 12: Auflaufschräge
- 13: Anschlag
- 14: Verbindungssteg
- 15: Tasteinrichtung
- 16: Hebel
- 17: Tastrolle
- 18: Hubzylinder
- 19: Rechnereinheit
- 20: Wipptaste
- 21: Multirichtungstaste
- 22: Speicher
- 23: Auswurfklappenstelleinrichtung
- 24: Schwenkwinkelstelleinrichtung
- 25: Höhenpositionsstelleinrichtung
- 26: Steuereinheit
- 27: Auswurfklappensteuereinheit
- 28: Tabelle
- 29: Datenfeld
- 30: Transportfahrzeug
- 31: Zugmaschine
- 32: Transportanhänger
- 33: Pickup-Vorsatzgerät
- 34: Auftreffpunkt
- 35: Wurfweite
- 36: Überladeabstand
- 37: Fahrtrichtung
- 38: Grasschwaden
- 39: Feldboden
- AB: Auswurfklappensteuerbefehl
- WB: Schwenkwinkelsteuerbefehl
- HB: Höhenpositionssteuerbefehl
- AS: Auswurfklappenstellsignal
- WS: Schwenkwinkelstellsignal
- HS: Höhenpositionsstellsignal

## Patentansprüche

1. Vorrichtung zur Steuerung einer Überladeeinrichtung (2) an einer Erntemaschine (1), wobei die Überladeeinrichtung (2) um eine vertikale Achse (3) sowie zur Veränderung der Höheneinstellung um eine horizontale Achse (4) schwenkbar in einem Abstand neben einem Gehäuseteil (5) der Erntemaschine (1) angeordnet ist,
mit Schwenkbereichbegrenzungsmitteln (11, 15, 19, 26, 28), welche den maximal zulässigen Schwenkbereich der Überladeeinrichtung (2) um die vertikale Achse (3) in Richtung des Gehäuseteils (5) zur Vermeidung einer Kollision mit dem Gehäuseteil (5) begrenzen,
**dadurch gekennzeichnet, dass**
die Schwenkbereichbegrenzungsmittel (11, 15, 19, 26, 28) derart ausgebildet und/oder angeordnet sind, dass der zulässige Schwenkbereich in Abhängigkeit von der Höheneinstellung der Überladeeinrichtung (2) bestimmt ist, und die Schwenkbereichbegrenzungsmittel (11, 15, 19, 26, 28) derart ausgebildet und/oder angeordnet sind, dass die Überladeeinrichtung (2) bei einer Verschwenkung in Richtung des Gehäuseteils (5) über den bei einer bestimmten Höheneinstellung der Überladeeinrichtung (2) festgelegten maximal zulässigen Schwenkbereich hinaus automatisch um zumindest eine horizontale Achse (4) in vertikaler Richtung höher geschwenkt wird.

2. Vorrichtung nach Anspruch 1, **dadurch gekennzeichnet, dass** die Schwenkbereichbegrenzungsmittel (11, 15, 19, 26, 28) derart ausgebildet und/oder angeordnet sind, dass mit zunehmender Höheneinstellung der Überladeeinrichtung (2) kontinuierlich der maximal zulässige Schwenkbereich erweitert wird.

3. Vorrichtung nach Anspruch 1, **dadurch gekennzeichnet, dass** die Schwenkbereichbegrenzungsmittel derart ausgebildet und/oder angeordnet sind, dass mit zunehmender Höheneinstellung der Überladeeinrichtung stufenweise der maximal zulässige Schwenkbereich erweitert wird.

4. Vorrichtung nach einem der Ansprüche 1 bis 3, **gekennzeichnet durch**
- Mittel zur Ermittlung eines Höhenpositionswerts, welcher die Höheneinstellung der Überladeeinrichtung (2) repräsentiert,
- eine Benutzerschnittstelle (21) zur Erzeugung eines Schwenkwinkelsteuerbefehls (WB) zur Verschwenkung der Überladeeinrichtung (2) um die vertikale Achse (3),
- und eine Steuereinheit (26), welche auf Basis des Höhenpositionswerts Grenzwerte für den zugehörigen maximal zulässigen Schwenkbereich ermittelt und auf Basis des Schwenkwinkelsteuerbefehls (WB) und unter Berücksichtigung der Schwenkbereichs-grenzwerte ein Schwenkwinkelstellsignal (WS) an eine Schwenkwinkelstelleinrichtung (24) zur entsprechenden Verschwenkung der Überladeeinrichtung (2) um die vertikale Achse (3) ausgibt,
umfassen.

5. Vorrichtung nach Anspruch 4, **dadurch gekennzeichnet, dass** die Steuereinheit (26) Mittel aufweist, um - sofern ein durch einen empfangenen Schwenkwinkelsteuerbefehl (WB) repräsentierter Schwenkwinkel außerhalb der ermittelten Schwenkbereichsgrenzwerte liegt - ein Höhenpositionsstellsignal (HS) an eine Höhenpositionsstelleinrichtung (25) zur Verschwenkung der Überladeeinrichtung (2) um die horizontale Achse (4) auszugeben und die Überladeeinrichtung (2) in eine Höheneinstellung mit einem weiteren Schwenkbereich zu verfahren.

6. Vorrichtung nach Anspruch 2, **dadurch gekennzeichnet, dass** die Schwenkbereichsbegrenzungsmittel (11, 15) eine Kulisse (11) und eine Abtasteinrichtung (15) umfassen, welche zumindest in einem Höheneinstellungsbereich der Überladeeinrichtung (2) bei einer Verschwenkung der Überladeeinrichtung (2) um die vertikale Achse (3) zumindest bereichsweise entlang der Kulisse (11) verfährt, wodurch die Überladeeinrichtung (2) bei einer Verschwenkung um die vertikale Achse (3) in Richtung des Gehäuseteils (5) zwangsläufig um die horizontale Achse (4) höhergeschwenkt wird.

7. Vorrichtung nach Anspruch 6, **dadurch gekennzeichnet, dass** die Abtasteinrichtung (15) ein Steuerelement aufweist, welches eine Stelleinrichtung zur Verschwenkung der Überladeeinrichtung (2) um die horizontale Achse (4) ansteuert.

8. Vorrichtung nach Anspruch 3, **dadurch gekennzeichnet, dass** die Schwenkbereichsbegrenzungsmittel unter Festlegung unterschiedlich weiter Schwenkbereiche mehrere stufenartig angeordnete mechanische Anschläge und/oder Endschalter aufweisen, so dass die Überladeeinrichtung bei einer Verschwenkung um die vertikale Achse in Richtung des Gehäuseteils in unterschiedlichen Höheneinstellungen jeweils gegen verschiedene der Anschläge und/oder Endschalter fährt.

9. Vorrichtung nach Anspruch 8, **dadurch gekennzeichnet, dass** zumindest ein Teil der Endschalter so mit einer Stelleinrichtung zur Verschwenkung der Überladeeinrichtung um die horizontale Achse verschaltet ist, dass die Überladeeinrichtung bei einer Verschwenkung um die vertikale Achse gegen einen der Endschalter um ein bestimmtes Maß nach oben verschwenkt wird.

10. Vorrichtung nach einem der Ansprüche 1 bis 9, **dadurch gekennzeichnet, dass** die Überladeeinrichtung (2) abgabeseitig eine verstellbare Auswurfklappe (7) aufweist und dass die Vorrichtung Steuermittel (27, 29) aufweist, um die Auswurfklappe (7) bei einer Verschwenkung der Überladeeinrichtung (2) um die vertikale und/oder horizontale Achse (3, 4) automatisch derart anzusteuern, dass ein vor der Verschwenkung eingestellter Überladeabstand (36) konstant bleibt.

11. Vorrichtung zur Steuerung einer um eine vertikale und/oder horizontale Achse (3, 4) schwenkbar an einer Erntemaschine (1) angeordneten Überladeeinrichtung (2), welche abgabeseitig eine verstellbare Auswurfklappe (7) aufweist,
**dadurch gekennzeichnet, dass** die Vorrichtung Steuermittel (27, 29) aufweiset, um die Auswurfklappe (7) bei einer Verschwenkung der Überladeeinrichtung (2) um die vertikale und/oder horizontale Achse (3, 4) automatisch derart anzusteuern, dass ein vor der Verschwenkung eingestellter Überladeabstand (36) im Wesentlichen konstant bleibt.

12. Erntemaschine (1) mit einer daran schwenkbar angeordneten Überladeeinrichtung (2) und mit einer Vorrichtung zur Steuerung der Überladeeinrichtung (2) nach einem der Ansprüche 1 bis 11.

13. Verfahren zur Steuerung einer Überladeeinrichtung (2) an einer Erntemaschine (1), bei welchem die Überladeeinrichtung (2) um eine vertikale Achse (3) sowie zur Veränderung einer Höheneinstellung um eine horizontale Achse (4) schwenkbar in einem Abstand neben einem Gehäuseteil (5) der Erntemaschine (1) an der Erntemaschine (1) angeordnet ist,
und bei welchem der zulässige Schwenkbereich der Überladeeinrichtung (2) um die vertikale Achse (3) in Richtung des Gehäuseteils (5) zur Vermeidung einer Kollision mit dem Gehäuseteil (5) begrenzt wird,
**dadurch gekennzeichnet, dass** der zulässige Schwenkbereich in Abhängigkeit von der Höheneinstellung der Überladeeinrichtung (2) bestimmt wird, und die Überladeeinrichtung (2) bei einer Verschwenkung in Richtung des Gehäuseteils (5) über den bei einer aktuellen Höheneinstellung der Überladeeinrichtung (2) festgelegten zulässigen Schwenkbereich hinaus automatisch um zumindest eine horizontale Achse (4) höher geschwenkt wird.

14. Verfahren zur Steuerung einer um eine vertikale und/oder horizontale Achse (3, 4) schwenkbar an einer Erntemaschine (1) angeordneten Überladeeinrichtung (2), welche abgabeseitig eine verstellbare Auswurfklappe (7) aufweist, **dadurch gekennzeichnet, dass**
die Auswurfklappe (7) bei einer Verschwenkung der Überladeeinrichtung (2) um die vertikale und/oder horizontale Achse (3, 4) derart verstellt wird, dass ein vor der Verschwenkung eingestellter Überladeabstand (36) konstant bleibt.

15. Verfahren nach Anspruch 14, **dadurch gekennzeichnet, dass** auf Basis eines Höhenpositionswerts, welcher die Höheneinstellung der Überladeeinrichtung (2) repräsentiert, eines Schwenkwinkelpositionswerts, welcher die Winkelposition der Überladeeinrichtung (2) bezüglich der vertikalen Schwenkachse repräsentiert, und eines Auswurfklappenpositionswerts, welcher die Stellung der Auswurfklappe (7) repräsentiert, der aktuelle Überladeabstand (36) ermittelt wird,
und dass bei einer Verschwenkung der Überladeeinrichtung (2) um die vertikale und/oder horizontale Achse (3, 4) anhand des neuen Höhenpositionswerts und des neuen Schwenkwinkelpositionswerts sowie des zuvor ermittelten Überladeabstands (36), die erforderliche Auswurfklappenposition ermittelt und die Auswurfklappe (7) automatisch in diese Position gestellt wird.

## Claims

1. Apparatus for controlling a transfer device (2) on a harvesting machine (1), wherein the transfer device (2) is arranged pivotably about a vertical axis (3) and for changing the height setting about a horizontal axis (4) at a spacing beside a housing portion (5) of the harvesting machine (1),
comprising pivotal range limiting means (11, 15, 19, 26, 28) which limit the maximum permissible pivotal range of the transfer device (2) about the vertical axis (3) in the direction of the housing portion (5) to prevent collision with the housing portion (5),
**characterised in that**
the pivotal range limiting means (11, 15, 19, 26, 28) are designed and/or arranged in such a way that the permissible pivotal range is determined in dependence on the height setting of the transfer device (2), and the pivotal range limiting means (11, 15, 19, 26, 28) are designed and/or arranged in such a way that upon a pivotal movement in the direction of the housing portion (5) beyond the maximum permissible pivotal range established at a given height setting of the transfer device (2), the transfer device (2) is automatically pivoted higher in a vertical direction about at least a horizontal axis (4).

2. Apparatus according to claim 1 **characterised in that** the pivotal range limiting means (11, 15, 19, 26, 28) are designed and/or arranged in such a way that the maximum permissible pivotal range is continuously enlarged with increasing height setting of the transfer device (2).

3. Apparatus according to claim 1 **characterised in that** the pivotal range limiting means are designed and/or arranged in such a way that the maximum permissible pivotal range is enlarged stepwise with increasing height setting of the transfer device.

4. Apparatus according to one of claims 1 to 3 **characterised by**
- means for ascertaining a heightwise position value which represents the height setting of the transfer device (2),
- a user interface (21) for producing a pivotal angle control command (WB) for the pivotal movement of the transfer device (2) about the vertical axis (3), and
- a control unit (26) which on the basis of the heightwise position value ascertains limit values for the associated maximum permissible pivotal range and on the basis of the pivotal angle control command (WB) and having regard to the pivotal range limit values outputs a pivotal angle setting signal (WS) to a pivotal angle setting device (24) for the corresponding pivotal movement of the transfer device (2) about the vertical axis (3).

5. Apparatus according to claim 4 **characterised in that** the control unit (26) has means in order that - if a pivotal angle represented by a received pivotal angle control command (WB) lies outside the ascertained pivotal range limit values - a heightwise position setting signal (HS) is outputted to a heightwise position setting device (25) for the pivotal movement of the transfer device (2) about the horizontal axis (4) and the transfer device (2) is displaced into a height setting with a greater pivotal range.

6. Apparatus according to claim 2 **characterised in that** the pivotal range limiting means (11, 15) include a slide member (11) and a sensing device (15) which at least in a height setting range of the transfer device (2) upon a pivotal movement of the transfer device (2) about the vertical axis (3) moves at least region-wise along the slide member (11), whereby the transfer device (2) is necessarily pivoted higher about the horizontal axis (4) upon a pivotal movement about the vertical axis (3) in the direction of the housing portion (5).

7. Apparatus according to claim 6 **characterised in that** the sensing device (15) has a control element which actuates a setting device for the pivotal movement of the transfer device (2) about the horizontal axis (4).

8. Apparatus according to claim 3 **characterised in that** the pivotal range limiting means have a plurality of mechanical abutments and/or limit switches arranged in stepped relationship, fixing pivotal ranges of differing widths, so that the transfer device moves against different respective ones of the abutments and/or limit switches upon a pivotal movement about the vertical axis in the direction of the housing portion in different height settings.

9. Apparatus according to claim 8 **characterised in that** at least some of the limit switches are connected to a setting device for the pivotal movement of the transfer device about the horizontal axis in such a way that the transfer device is pivoted upwardly by a given amount upon a pivotal movement about the vertical axis against one of the limit switches.

10. Apparatus according to one of claims 1 to 9 **characterised in that** the transfer device (2) has a displaceable ejection flap (7) at the discharge side and that the apparatus has control means (27, 29) for automatically actuating the ejection flap (7) upon a pivotal movement of the transfer device (2) about the vertical and/or horizontal axis (3, 4) in such a way that a transfer spacing (36) set prior to the pivotal movement remains constant.

11. Apparatus for controlling a transfer device (2) which is arranged on a harvesting machine (1) pivotably about a vertical and/or horizontal axis (3, 4) and which at the discharge side has a displaceable ejection flap (7), **characterised in that** the apparatus has control means (27, 29) for automatically actuating the ejection flap (7) upon a pivotal movement of the transfer device (2) about the vertical and/or horizontal axis (3, 4) in such a way that a transfer spacing (36) set prior to the pivotal movement remains substantially constant.

12. A harvesting machine (1) comprising a transfer device (2) arranged pivotably thereon and an apparatus for controlling the transfer device (2) according to one of claims 1 to 11.

13. A method of controlling a transfer device (2) on a harvesting machine (1) in which the transfer device (2) is arranged on the harvesting machine (1) pivotably about a vertical axis (3) and for changing a height setting about a horizontal axis (4) at a spacing beside a housing portion (5) of the harvesting machine (1),
and in which the permissible pivotal range of the transfer device (2) about the vertical axis (3) is limited in the direction of the housing portion (5) to avoid collision with the housing portion (5),
**characterised in that**
the permissible pivotal range is determined in dependence on the height setting of the transfer device (2), and upon a pivotal movement in the direction of the housing portion (5) beyond the permissible pivotal range established at a currently prevailing height setting of the transfer device (2), the transfer device (2) is automatically pivoted higher about at least a horizontal axis (3).

14. A method of controlling a transfer device (2) arranged on a harvesting machine (1) pivotably about a vertical and/or horizontal axis (3, 4) and which at its discharge side has a displaceable ejection flap (7), **characterised in that** the ejection flap (7) is displaced in such a way upon a pivotal movement of the transfer device (2) about the vertical and/or horizontal axis (3, 4) that a transfer spacing (36) set prior to the pivotal movement remains constant.

15. A method according to claim 14 **characterised in that** on the basis of a heightwise position value which represents the height setting of the transfer device (2), a pivotal angle position value which represents the angle position of the transfer device (2) with respect to the vertical pivot axis, and an ejection flap position value which represents the position of the ejection flap (7), the currently prevailing transfer spacing (36) is ascertained, and that upon a pivotal movement of the transfer device (2) about the vertical and/or horizontal axis (3, 4), by means of the new heightwise position value and the new pivotal angle position value as well as the previously ascertained transfer spacing (36) the required ejection flap position is ascertained and the ejection flap (7) is automatically put into that position.

## Revendications

1. Dispositif de commande d'un agencement de transfert (2) sur une machine de récolte (1), l'agencement de transfert (2) étant disposé pivotant autour d'un axe vertical (3) ainsi que, pour modifier le réglage en hauteur, autour d'un axe horizontal (4) à distance à côté d'une partie de carrosserie (5) de la machine de récolte (1), comprenant des moyens de limitation de plage de pivotement (11, 15, 19, 26, 28) qui limitent la plage de pivotement maximale admise de l'agencement de transfert (2) autour de l'axe vertical (3) en direction de la partie de carrosserie (5) afin d'éviter une collision avec la partie de carrosserie (5), **caractérisé en ce que** les moyens de limitation de plage de pivotement (11, 15, 19, 26, 28) sont conçus et/ou disposés de façon que la plage de pivotement admise soit déterminée en fonction du réglage en hauteur de l'agencement de transfert (2), et les moyens de limitation de plage de pivotement (11, 15, 19, 26, 28) sont conçus et/ou disposés de façon que l'agencement de transfert (2), en cas de pivotement en direction de la partie de carrosserie (5) au-delà de la plage de pivotement maximale admise définie pour un réglage en hauteur déterminé de l'agencement de transfert (2), soit automatiquement relevé par pivotement dans le sens vertical autour d'au moins un axe horizontal (4).

2. Dispositif selon la revendication 1, **caractérisé en ce que** les moyens de limitation de plage de pivotement (11, 15, 19, 26, 28) sont conçus et/ou disposés de façon que la plage de pivotement maximale admise soit élargie de manière continue à mesure que le réglage en hauteur de l'agencement de transfert (2) augmente.

3. Dispositif selon la revendication 1, **caractérisé en ce que** les moyens de limitation de plage de pivotement sont conçus et/ou disposés de façon que la plage de pivotement maximale admise soit élargie de manière étagée à mesure que le réglage en hauteur de l'agencement de transfert augmente.

4. Dispositif selon une des revendications 1 à 3, **caractérisé par**
- des moyens pour déterminer la valeur de position en hauteur, laquelle représente le réglage en hauteur de l'agencement de transfert (2),
- une interface utilisateur (21) pour générer une instruction de commande d'angle de pivotement (WB) afin de faire pivoter l'agencement de transfert (2) autour de l'axe vertical (3),
- et une unité de commande (26) qui détermine, sur la base de la valeur de position en hauteur, des valeurs limites pour la plage de pivotement maximale admise correspondante et envoie, sur la base de l'instruction de commande d'angle de pivotement (WB) et en tenant compte des valeurs limites de plage de pivotement, un signal de réglage d'angle de pivotement (WS) à un dispositif de réglage d'angle de pivotement (24) pour faire pivoter en conséquence l'agencement de transfert (2) autour de l'axe vertical (3).

5. Dispositif selon la revendication 4, **caractérisé en ce que** l'unité de commande (26) comporte des moyens pour - si un angle de pivotement représenté par une instruction de commande d'angle de pivotement (WB) reçue se trouve à l'extérieur des valeurs limites de plage de pivotement déterminées - envoyer un signal de réglage de position en hauteur (HS) à un dispositif de réglage de position en hauteur (25) afin de faire pivoter l'agencement de transfert (2) autour de l'axe horizontal (4) et amener l'agencement de transfert (2) dans un réglage en hauteur avec une plage de pivotement élargie.

6. Dispositif selon la revendication 2, **caractérisé en ce que** les moyens de limitation de plage de pivotement (11, 15) comprennent une coulisse (11) et un dispositif palpeur (15) qui, au moins dans une plage de réglage en hauteur de l'agencement de transfert (2), en cas de pivotement de l'agencement de transfert (2) autour de l'axe vertical (3), se déplace au moins par endroits le long de la coulisse (11), de sorte que l'agencement de transfert (2), en cas de pivotement autour de l'axe vertical (3) en direction de la partie de carrosserie (5), est obligatoirement relevé par pivotement autour de l'axe horizontal (4).

7. Dispositif selon la revendication 6, **caractérisé en ce que** le dispositif palpeur (15) comporte un élément de commande qui commande un dispositif de positionnement pour faire pivoter l'agencement de transfert (2) autour de l'axe horizontal (4).

8. Dispositif selon la revendication 3, **caractérisé en ce que** les moyens de limitation de plage de pivotement comportent plusieurs butées mécaniques et/ou commutateurs de fin de course disposés de manière étagée en définissant des plages de pivotement d'amplitudes différentes, de sorte que l'agencement de transfert, lorsqu'il pivote autour de l'axe vertical en direction de la partie de carrosserie dans différents réglages en hauteur, bute à chaque fois contre diverses butées et/ou commutateurs de fin de course.

9. Dispositif selon la revendication 8, **caractérisé en ce qu'**au moins une partie des commutateurs de fin de course est câblée avec un dispositif de positionnement pour faire pivoter l'agencement de transfert autour de l'axe horizontal, de façon que l'agencement de transfert, lorsqu'il pivote autour de l'axe vertical contre un des commutateurs de fin de course, soit pivoté vers le haut selon une grandeur déterminée.

10. Dispositif selon une des revendications 1 à 9, **caractérisé en ce que** l'agencement de transfert (2) comporte côté sortie un déflecteur réglable (7) et **en ce que** le dispositif comporte des moyens de commande (27, 29) pour commander automatiquement le déflecteur (7) en cas de pivotement de l'agencement de transfert (2) autour de l'axe vertical et/ou horizontal (3, 4), de façon qu'une distance de transfert (36) réglée avant le pivotement reste constante.

11. Dispositif de commande d'un agencement de transfert (2) disposé pivotant sur une machine de récolte (1) autour d'un axe vertical et/ou horizontal (3, 4), lequel dispositif comporte côté sortie un déflecteur réglable (7), **caractérisé en ce que** le dispositif comporte des moyens de commande (27, 29) pour commander automatiquement le déflecteur (7) en cas de pivotement de l'agencement de transfert (2) autour de l'axe vertical et/ou horizontal (3, 4), de façon qu'une distance de transfert (36) réglée avant le pivotement reste sensiblement constante.

12. Machine de récolte (1) comprenant un agencement de transfert (2) qui y est disposé pivotant, et comprenant un dispositif de commande de l'agencement de transfert (2) selon une des revendications 1 à 11.

13. Procédé de commande d'un agencement de transfert (2) sur une machine de récolte (1), dans lequel l'agencement de transfert (2) est disposé pivotant sur la machine de récolte (1) autour d'un axe vertical (3) ainsi que, pour modifier un réglage en hauteur, autour d'un axe horizontal (4) à distance à côté d'une partie de carrosserie (5) de la machine de récolte (1), et dans lequel la plage de pivotement admise de l'agencement de transfert (2) autour de l'axe vertical (3) en direction de la partie de carrosserie (5) est limitée afin d'éviter une collision avec la partie de carrosserie (5), **caractérisé en ce que** la plage de pivotement admise est déterminée en fonction du réglage en hauteur de l'agencement de transfert (2), et l'agencement de transfert (2), en cas de pivotement en direction de la partie de carrosserie (5) au-delà de la plage de pivotement admise définie pour un réglage en hauteur instantané de l'agencement de transfert (2), est automatiquement relevé par pivotement autour d'au moins un axe horizontal (4).

14. Procédé de commande d'un agencement de transfert (2) disposé pivotant sur une machine de récolte (1) autour d'un axe vertical et/ou horizontal (3, 4), lequel agencement comporte côté sortie un déflecteur réglable (7), **caractérisé en ce que** le déflecteur (7), en cas de pivotement de l'agencement de transfert (2) autour de l'axe vertical et/ou horizontal (3, 4), est déplacé de façon qu'une distance de transfert (36) réglée avant le pivotement reste constante.

15. Procédé selon la revendication 14, **caractérisé en ce que** la distance de transfert instantanée (36) est calculée sur la base d'une valeur de position en hauteur, laquelle représente le réglage en hauteur de l'agencement de transfert (2), d'une valeur de position d'angle de pivotement, laquelle représente la position angulaire de l'agencement de transfert (2) par rapport à l'axe de pivotement vertical, et d'une valeur de position de déflecteur, laquelle représente la position du déflecteur (7), et **en ce que**, en cas de pivotement de l'agencement de transfert (2) autour de l'axe vertical et/ou horizontal (3, 4), la position de déflecteur requise est calculée à l'aide de la nouvelle valeur de position en hauteur et de la nouvelle valeur de position d'angle de pivotement ainsi que de la distance de transfert préalablement calculée (36), et le déflecteur (7) est amené automatiquement dans cette position.
